# EUROPEAN PATENT APPLICATION

(11) **EP 2 040 257 A1**
(43) Date of publication of application: **25.03.2009**
(21) Application number: 07117048.4
(22) Date of filing: 24.09.2007
(51) Int. Cl.: G11B 7/09, G11B 7/135

(54) **Light beam spot shape modification with full push-pull functionality**

(71) Applicant: Deutsche Thomson OHG, 30625 Hannover (DE)
(72) Inventor: Przygodda, Frank, 78050, Villlingen-Schwenningen (DE); Knittel, Joachim, 78532, Tuttlingen (DE)
(74) Representative: Schmidt-Uhlig, Thomas

(57) **Abstract**

The present invention generally relates to a method for modifying the spot shape of a focused light beam. More specifically, the invention relates to a method for enlarging the spot of a focused light beam in such way that full push-pull functionality is kept. The invention further relates to an optical element suitable for realizing the modification of the spot shape of the focused light beam, and to an apparatus for reading from and/or writing to optical recording media using such method or optical element.

According to the invention, a special phase distribution is applied to the light beam (1), which acts like a grating and splits the light beam (1) into several orders.

## Description

The present invention generally relates to a method for modifying the spot shape of a focused light beam. More specifically, the invention relates to a method for enlarging the spot of a focused light beam in such way that full push-pull functionality is kept. The invention further relates to an optical element suitable for realizing the modification of the spot shape of the focused light beam, and to an apparatus for reading from and/or writing to optical recording media using such method or optical element.

The progress in conventional pit-based optical data storage over the last decades has lead to higher numerical apertures and shorter wavelengths. Currently several formats coexist with different optical parameters, like CD (Compact Disk), DVD (Digital Versatile Disk) and Blu-Ray. For several reasons it can be beneficial to combine characteristics of different formats, like for example writing to a DVD-like disk with a light source emitting a blue wavelength as used for Blu-Ray (405nm). For instance, such a disk can be designed in such way that no push-pull signal is generated when the disk is read with a DVD-ROM player using a light source emitting a red wavelength (650nm), whereas the blue wavelength ensures a necessary push-pull signal during the write process. However, a shorter wavelength results in a smaller writing spot compared with the read-out spot obtained at a longer wavelength. It would be advantageous to enlarge the light spot during writing to simulate the behavior of the spot obtained at a larger wavelength, for which the disk read-out is specified.

The intensity profile of the focused light spot depends mainly on the beam profile and the numerical aperture (NA) of the focusing lens. Furthermore, wavefront errors (aberrations) of the light beam affect the actual shape of the spot. A homogenous beam profile without wavefront errors in combination with a high NA focusing lens produces the smallest light spot.

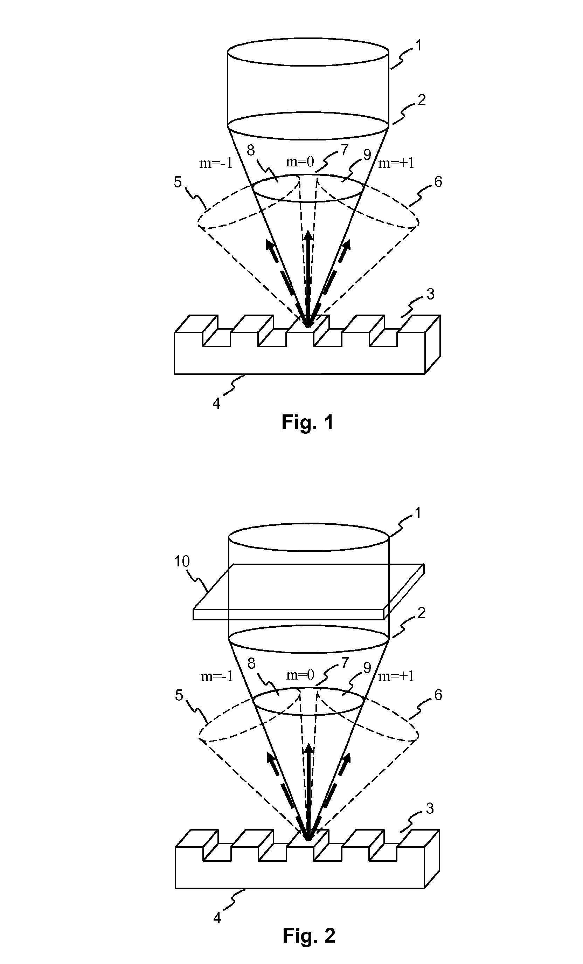

The track structure of a disk acts like a reflection grating, which diffracts the laser light into several orders m. The light of the m=+1 and m=-1 order overlaps partly with the m=0 order and hence interferes with the light of the m=0 order. This is illustrated schematically in Fig. 1. The superimposed light in the overlapping areas interferes either constructively or destructively, depending on the phase relation. The phase relation in turn depends on the current track error. The amount of light in each overlapping area is detected individually by a segmented photo detector. By subtraction of the signals of both detector parts a track error signal can be obtained. This principle is known as push-pull tracking.

One possibility to obtain an enlarged spot is to reduce the NA. This has the consequence of smaller overlapping areas of the diffraction orders, which leads to a lower push-pull signal amplitude. Another possibility is to use a Gaussian beam profile. In this case the intensity at the beam rim and, therefore, in the overlapping area is relatively low, which also results in a lower push-pull signal amplitude. A third possibility is to apply wavefront errors to the light beam. This usually destroys the phase relation of the light in the overlapping areas of the diffraction orders, which also reduces the push-pull signal amplitude.

It is an object of the invention to propose a solution for enlarging the spot of a focused light beam, which enables to keep full push-pull functionality.

According to the invention, this object is achieved by a phase influencing element for modifying the beam shape of a light beam having a first wavelength, which applies a special phase distribution to the light beam.

The special phase distribution applied to the light beam varies over the beam area and acts like a grating, which splits the light beam into several orders. This leads to an enlarged beam spot at least in a first direction when the light beam is focused by a focusing lens.

Advantageously, the beam spot is enlarged in such way as to simulate the behavior of a light beam with a second, longer wavelength.

Advantageously, the phase distribution is chosen in such a way that upon diffraction at a track structure of an optical recording medium a locally identical phase relation is given for overlapping parts of diffracted light beams. This locally identical phase relation avoids unwanted destructive interference in the overlapping parts. In this way the push-pull amplitude is not affected, i.e. the full push-pull functionality is ensured for tracking. The locally identical phase relation for overlapping parts of diffracted light beams and the enlargement of the beam spot are the key properties of the phase distribution. Possible spatial phase distributions include one-dimensional or two-dimensional periodical functions, like a cosine, sine, triangle, or other function, or a step-function having a first phase value for overlapping parts of the diffracted light beams and a second phase value for non-overlapping parts of the diffracted light beams.

Preferably, the special phase distribution is applied to the light beam via a diffractive optical element (DOE) or a phase element. Such types of elements can be easily designed and manufactured for a given situation.

Advantageously, a method for writing marks to an optical recording medium with a light beam having a first wavelength has the step of applying a special phase distribution to the light beam for enlarging a focus spot of the light beam in such way as to simulate the behavior of a light beam with a second, longer wavelength.

Preferentially, an apparatus for writing to optical recording media uses the solution according to the invention for modifying the beam shape of a light beam with a first wavelength in such way as to simulate the behavior of a light beam with a second, longer wavelength. This is easily achieved by incorporating the proposed phase element into the optical path of the light beam.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows the principle of push-pull tracking,
- Fig. 2: shows a modification of the setup of Fig. 1,
- Fig. 3: schematically depicts the basic principle of the present invention,
- Fig. 4: shows a spot shape obtained with a phase distribution Δφ=+/-0.3π,
- Fig. 5: shows a spot shape obtained with a phase distribution Δφ=+/-0.45π,
- Fig. 6: shows a spot shape obtained with a phase distribution Δφ=+/-1.0π,
- Fig. 7: illustrates a first phase distribution that fulfills the key properties of the invention, and
- Fig. 8: illustrates a second phase distribution that fulfills that fulfill the key properties of the invention, and
- Fig. 9: illustrates a third phase distribution that fulfills that fulfill the key properties of the invention, and
- Fig. 10: illustrates a fourth phase distribution that fulfills that fulfill the key properties of the invention, and
- Fig. 11: shows an example of a modified beam spot shape with a reduced NA.

Fig. 1 illustrates the principle of push-pull tracking. A light beam 1 focused by a focusing lens 2 impinges on the track structure 3 of an optical recording medium 4. The track structure 3 acts like a reflection grating, which diffracts the light beam 1 into several orders m. The light 5 of the m=+1 order and the light 6 of the m=-1 order overlaps partly with the m=0 order 7 and hence interferes with the m=0 order. The superimposed light in the overlapping areas 8, 9 interferes either constructively or destructively, depending on the phase relation, i.e. on the position relative to the center of a groove or land of the track structure 3. The amount of light in each overlapping area 8, 9 is detected individually by a segmented photo detector (not shown). By subtraction of the signals of both detector parts a track error signal is obtained.

Fig. 2 illustrates a modification of the setup of Fig. 1, which allows to implement the present invention. A phase influencing element 10, e.g. a diffractive optical element or a phase element, is located in the incoming light beam 1. In a standard optical pickup, the phase influencing element 10 is preferably placed between the laser and the objective lens, e.g. between the laser and a beam splitter.

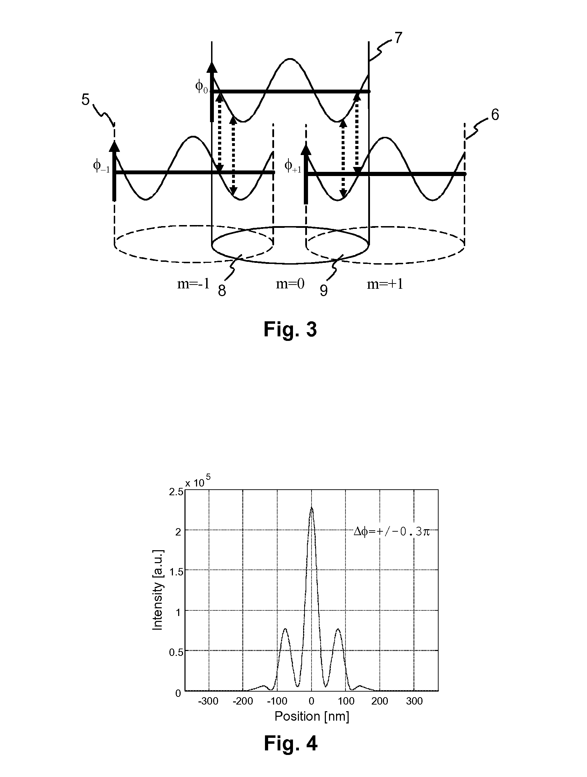

The basic principle of the invention is depicted in Fig. 3. Illustrated on this figure are the zeroth and the ±first diffractions orders 5, 6, 7, designated by m=-1, m=0, and m=+1, as well as the distribution of the phase φ in these diffraction orders 5, 6, 7. The phase influencing element 10 modifies the phase distribution of the light beam 1. In this example the distribution of the phase φ of the light beams follows a cosine function in a direction parallel to the phase influencing element 10 and within the plane spanned by the diffraction orders 5, 6, 7. Perpendicular to this direction the phase φ is constant. The period P of the cosine is P=λf/t, where λ is the wavelength, f is the focal length of the objective lens, and t is the track pitch, so that the phase relation is locally the same for light of the zeroth order 7 (m=0) and the ±first orders 5, 6, (m=±1), respectively. This means that at every point inside the overlapping areas 8, 9 the light of both diffraction orders has the same phase, even if the phase varies spatially, or with other words, the relative phase difference is constant within the overlapping areas. Constructive or destructive interference is thus achieved within the complete overlapping area 8, 9. This ensures that the same push-pull signal amplitude is obtained as in the usual case with a constant phase. At the same time this special phase distribution affects the spot shape of the focused beam. The cosine phase distribution acts like a grating, which splits the light beam into several orders. These additional orders produce additional light spots next to the central focus spot in the direction given by the cosine modulation. This means that the total intensity distribution is spread over a larger area, or with other words, the light distribution is enlarged. Depending on parameters like the amplitude Δφ and period of the phase distribution it is possible to obtain different spot shapes, as shown in Figs. 4 to 6 along the direction defined by the diffraction orders. This allows for an adaptation of the spotsize, e.g. to simulate the behavior of the spot produced by a particular wavelength.

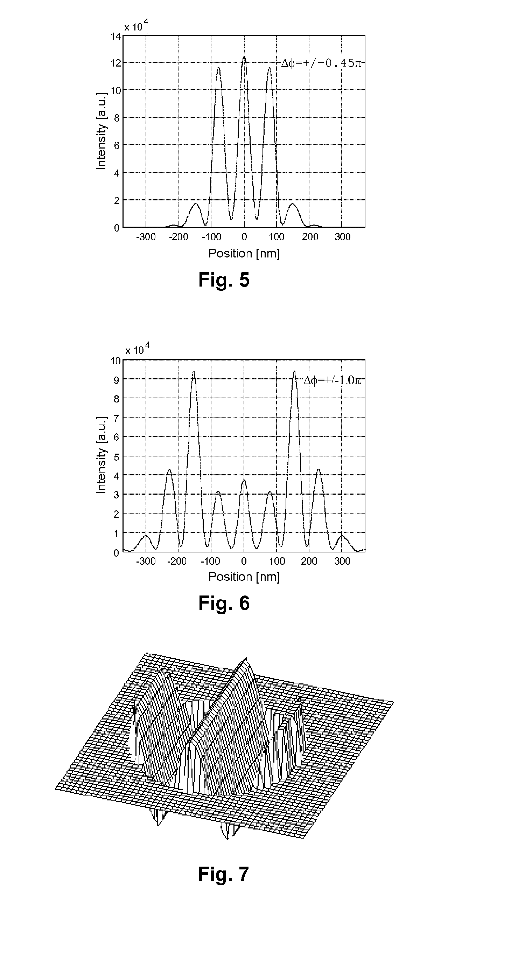

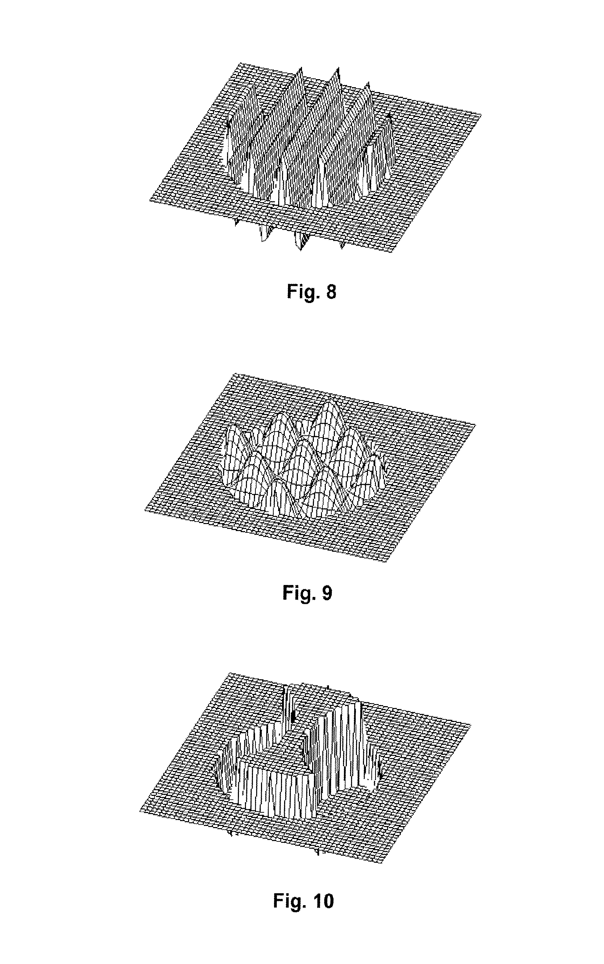

The phase distribution described in the example (which is also shown as a 3D-plot in Fig. 7 is not the only one which fulfills the key-properties mentioned above. They are also fulfilled by a cosine function with half of the period, as can be seen in Fig. 8. In this case the additional light spots are more distant from the central focus spot. The phase distribution can also vary in the direction perpendicular to the direction defined by the diffraction orders, as long the key-properties are fulfilled. In this case the spot shape is also modified in the corresponding direction, as can be seen in Fig. 9. This is advantageous, for example, for a better simulation of the spot produced by a longer wavelength. Furthermore, also a step-wise phase distribution can be used to fulfill the key-properties. This is illustrated in Fig. 10. In this case the phase influencing element 10 influences the beam only in the region where the m=0 order 7 and the m=+/-1 orders 5, 6 do not overlap.

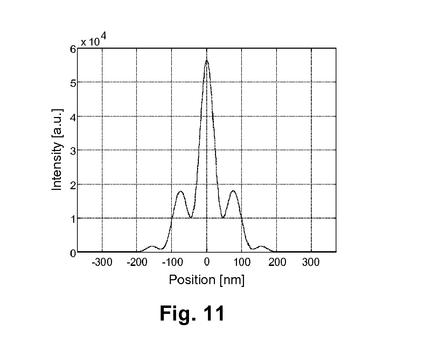

In between the individual spots that can be seen in Figs. 4 to 6 intensity minima are present. In the process of writing to an optical recording medium with such an intensity distribution several parallel marks would be written instead of one single broad mark. In case this is not desired, additionally the NA or the beam profile can be modified. It is sufficient to ensure that the push-pull amplitude does not drop below the detection limit. An example of a modified beam spot obtained with a reduced NA is illustrated in Fig. 11. Another possibility to avoid the parallel marks is to increase the laser intensity to such extent that the recording material runs into saturation.

In this case, also the low intensity in between the intensity maxima will contribute to write one broad mark.

## Claims

1. Phase influencing element (10) for modifying the beam shape of a light beam (1) having a first wavelength, **wherein** the phase influencing element (10) applies a special phase distribution to the light beam (1).

2. Phase influencing element (10) according to claim 1, **wherein** the special phase distribution is chosen in such a way that a focus spot of the light beam (1) is enlarged at least in a first direction.

3. Phase influencing element (10) according to claim 2, **wherein** the focus spot of the light beam (1) is enlarged in such way as to simulate the behavior of a light beam with a second, longer wavelength.

4. Phase influencing element (10) according to one of claims 1 to 3, **wherein** the special phase distribution varies over the beam area and acts like a grating, which splits the light beam (1) into several orders.

5. Phase influencing element (10) according to one of claims 1 to 4, **wherein** the special phase distribution is chosen in such a way that upon diffraction at a track structure (3) of an optical recording medium (2) a locally identical phase relation is given for overlapping parts (8, 9) of diffracted light beams (5, 6, 7).

6. Phase influencing element (10) according to claim 5, **wherein** a spatial variation of the special phase distribution is a one-dimensional or two-dimensional periodical function, like a cosine, sine, triangle, or other function, or a step-function having a first phase value for overlapping parts (8, 9) of the diffracted light beams (5, 6, 7) and a second phase value for non-overlapping parts (8, 9) of the diffracted light beams (5, 6, 7).

7. Phase influencing element (10) according to one of claims 1 to 6, **wherein** it is a diffractive optical element or a phase element.

8. Method for modifying the beam shape of a light beam (1) having a first wavelength, **having** the step of applying a special phase distribution to the light beam (1).

9. Method for writing marks to an optical recording medium (2) with a light beam (1) having a first wavelength, **having** the step of applying a special phase distribution to the light beam (1) for enlarging a focus spot of the light beam (1) at least in a first direction.

10. Method according to claim 9, **wherein** the focus spot of the light beam (1) is enlarged in such way as to simulate the behavior of a light beam with a second, longer wavelength.

11. Method according to claim 9 or 10, **wherein** the special phase distribution varies over the beam area and acts like a grating, which splits the light beam (1) into several orders.

12. Method according to one of claims 9 to 11, **further** having the step of increasing a laser intensity to such extent that the material of the optical recording medium (2) runs into saturation.

13. Method according to one of claims 9 to 12, **further** having the step of reducing a numerical aperture.

14. Apparatus for writing to optical recording media (2), **characterized in that** it includes a phase influencing element (10) according to one of claims 1 to 7.
